Europäisches Patentamt

European Patent Office

Office européen des brevets

(19)

(11) Veröffentlichungsnummer: **0 284 083**
**A2**

(12) **EUROPÄISCHE PATENTANMELDUNG**

(21) Anmeldenummer: 88104803.7

(22) Anmeldetag: 25.03.88

(51) Int. Cl.⁴: **B23D 45/06** , B23D 45/04

(30) Priorität: 27.03.87 DE 3710124

(43) Veröffentlichungstag der Anmeldung:
**28.09.88 Patentblatt 88/39**

(84) Benannte Vertragsstaaten:
**DE FR GB IT**

(71) Anmelder: **Trennjaeger Maschinen- u.
Sägenfabrik
Rudolf-Diesel-Strasse 1
D-5350 Euskirchen(DE)**

(72) Erfinder: **Jägers, Leopold
Billigerstrasse 125
D-5350 Euskirchen(DE)**

(74) Vertreter: **Patentanwaltsbüro Cohausz &
Florack
Postfach 14 01 47
D-4000 Düsseldorf 1(DE)**

(54) **Unter-Tisch-Kaltkreissäge.**

(57) Die Erfindung betrifft eine Unter-Tisch-Kaltkreissäge, deren unter der Tischplatte angeordnetes
senkrechtes Kreissägeblatt von einem Schwenkarm
gehalten ist, der zum Anheben und Absenken der
Kreissäge um eine waagerechte Schwenkachse beweglich ist. Die Schwenkachse ist rechtwinklig zu ihr
waagerecht verschieblich gelagert und durch eine
Spannvorrichtung gegen ein Verschieben festklemmbar.

Fig.1

EP 0 284 083 A2

## Unter-Tisch-Kaltkreissäge

Kaltkreissägen dienen zum gratfreien exakten Sägen von Stahlprofilen verschiedenster Qualitäten, sowie der meisten NE-Metalle. Bei den unterschiedlichsten Anwendungen dieser Methode hat sich ein Verfahren zum Sägen, z. B. von Rund- und Vierkantrohren als besonders günstig für Schrägschnitte herausgestellt. Diese sogenannten Unter-Tisch-Sägen arbeiten vertikal von unten aus dem Tisch heraus. Hieraus ergibt sich, daß das Sägeblatt nur beim Sägen sichtbar wird. Maschinen die in dieser Art arbeiten, sind seit über 30 Jahren bekannt. Ein Nachteil bei den bekannten Maschinen ist aber, daß das Sägeblatt immer an der gleichen Stelle des Tisches heraustritt. Wird z.B. ein Rechteckrohr von 240 mm Breite auf 90° gesägt, so sollte die Mitte des Sägeblattes 120 mm vor der Bezugslinie aus dem Tisch heraustreten. Würde nach diesem Schnitt von 240 mm Breite ein Material von nur 60 mm Breite gesägt, so würde hier die Mitte nur 30 mm vor der Bezugslinie liegen, d.h., die Bezugslinie müßte um 90 mm versetzt werden. Auch um das Verlaufen des Sägeblattes beim Anschneiden von Schrägschnitten zu verhindern, ist es erforderlich, die Mitte des Sägeblattes unter die Mitte des zu sägenden Materials zu plazieren. Aus diesem Grund wird bei den bisher bekannten Unter-Tisch-Kaltkreissägen das Material auf der Tischplatte entsprechend verschoben, das heißt, die Bezugslinie des Materials muß um eine gewisse Distanz verändert werden.

Wie umständlich eine Korrektur dieser Distanz bei bisherigen Maschinen ist, ergibt sich aus folgenden Punkten:

1. Der Werkstückanschlag, der sich an einer Spannbrücke oder einem Aufbau befindet, muß oberhalb der Maschine entsprechend versetzt werden.

2. Die beiden Anschlagplatten des Werkstückanschlags müssen zum Sägen von Schrägschnitten versetzt werden.

3. Das Material muß über die gesamte Länge, d.h., z.B. bei handelsüblichen Längen von 6 m, links von der Maschine 6 m und rechts von der Maschine 6 m, eine neue Bezugslinie erhalten.

4. Längenmeßanschläge müssen sich ebenfalls dieser verstellbaren Bezugslinie anpassen und werden dadurch kompliziert und teuer, weil sonst unterschiedliche Maße beim Gehrungs-Sägen entstehen würden.

5. Eine Verstellung über NC bei modernen NC Maschinen ist nicht oder nur sehr kompliziert und damit teuer zu bewerkstelligen.

6. Das vollautomatische Einbringen des Materials an die unterschiedliche Stellung der Bezugslinie erfordert Mehraufwand bei vollautomatischen Maschinen.

7. Erfahrungsgemäß ist pro Tag ein Zeitaufwand für die Verstellung der Bezugslinie bzw. der Punkte 1-6 von 10 bis 30 Minuten erforderlich. Das ergibt einen Kostenaufwand für diese Rüstzeit in 10 Jahren, der höher liegen kann, als der Anschaffungspreis der Maschine.

Dieses gilt für die Art der Maschine, welche von unten sägt. Eine Verstellung des Schwenklagers bei Maschinen, die von oben sägen, ist aus dem italienischen Patent Nr. 592461 vom 04.05.1959 bekannt. Die Konstruktion einer Unter-Tisch-Säge nach diesem italienischen Patent ist aber aus Gründen der Kraftübertragung nicht möglich.

Aufgabe der Erfindung ist es, eine Unter-Tisch-Kaltkreissäge so auszubilden, daß die auftretenden Kräfte sicher aufgefangen werden.

Diese Aufgabe wird erfindungsgemäß dadurch gelöst, daß die Schwenkachse rechtwinklig zu ihr waagerecht verschieblich gelagert und durch eine Spannvorrichtung gegen ein Verschieben festklemmbar ist.

Hierbei ist maßgeblich, daß nicht nur das Schwenklager sicher geklemmt wird, sondern, daß auch die Kräfte, die durch das Festspannen des Materials entstehen, diese Klemmung nicht abschwächen, sondern noch verstärken.

Besonders vorteilhaft ist es, wenn die Schwenkachse von einem Lagerteil getragen ist, das unterhalb der Tischplatte waagerecht verschieblich geführt ist, da dann die Spannkräfte direkt von der Tischplatte übernommen werden können. Hierzu wird auch vorgeschlagen, daß das Lagerteil mit einer oberen Platte an der Unterseite der Tischplatte waagerecht verschieblich geführt ist. Konstruktiv besonders einfach und sicher ist es, wenn das Lagerteil durch ein Teil, insbesondere eine Zugstange, Spindel, Exzenter oder Zahnstange gegen die Tischplatte oder gegen ein am Maschinenunterteil befestigtes Teil festklemmbar ist. Hierbei kann die Zugstange die Tischplatte und ein Langloch der oberen Platte des Lagerteils durchdringen. Ausreichend hohe Kräfte bei einfacher und genauer Steuerung werden dann erreicht, wenn das Teil, insbesondere die Zugstange durch eine Hydraulikzylinderkolbeneinheit betätigbar ist.

Eine Verstärkung der Kräfte wird dann erreicht, wenn an der Zugstange ein zweiarmiger Hebel mit seiner inneren Anlenkstelle und an einem Ende des Hebels die Hydraulikzylinderkolbeneinheit befestigt ist. Hierbei kann am anderen Ende des Hebels ein Teil befestigt sein, das mit der Vorrichtung, insbesondere der Hydraulikzylinderkolbeneinheit verbunden ist, durch die die Werkstücke festspannbar sind, so daß durch das Festspannen der Werkstücke automatisch dafür gesorgt wird, daß stets eine ausreichende Kraft zum Halten der Schwenkachse gegeben ist.

Besonders einfach ist die Vorrichtung dann handhabbar, wenn die Schwenkachse, insbesondere das Lagerteil, durch ein Verstellglied wie eine Spindel oder eine Hydraulikzylinderkolbeneinheit verstellbar ist. Auch wird für eine sichere Stellung des Lagerteils im festgespannten Zustand vorgeschlagen, daß unten an der Zugstange eine Platte befestigt ist, die an der Unterseite der Platte des Lagerteils mit Erhebungen, insbesondere Riefen anliegt. Vorzugsweise wird das Lagerteil durch Führungsteile gelagert.

Von Vorteil ist es auch, wenn an der Oberseite der Tischplatte ein Gehrungsanschlag verschwenkbar gelagert und durch eine Hydraulikzylinderkolbeneinheit festklemmbar ist.

Ausführungsbeispiele der Erfindung sind in den Zeichnungen dargestellt und werden im folgenden näher beschrieben. Es zeigen:

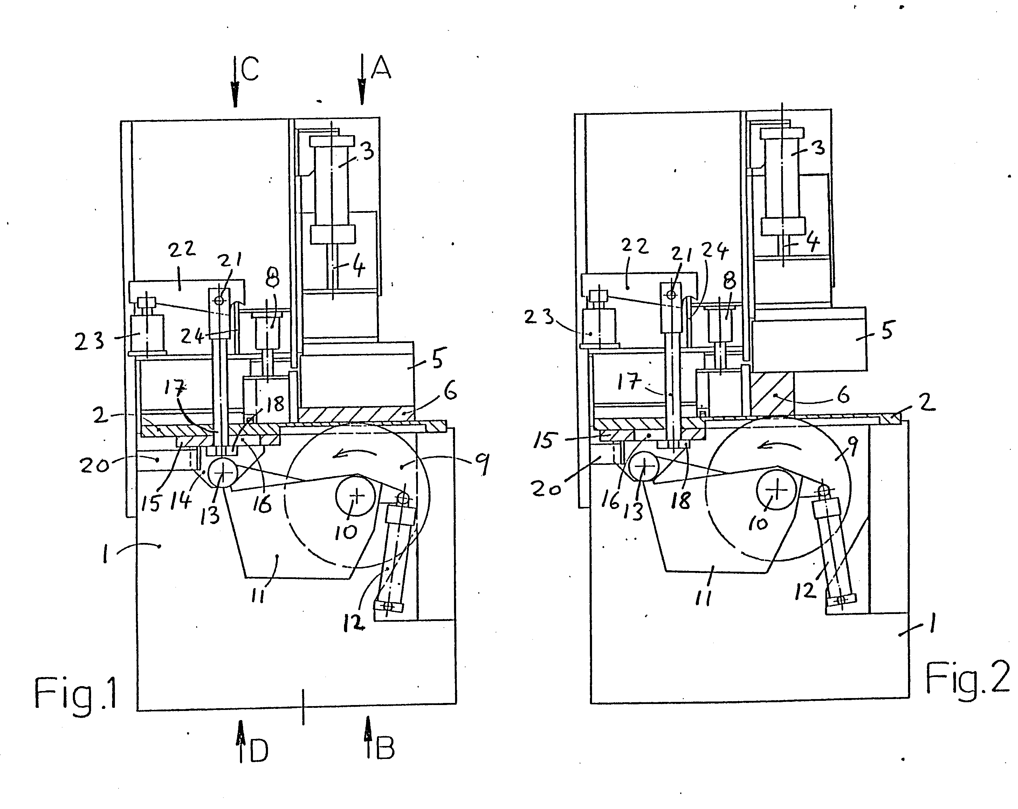

Figur 1 eine Seitenansicht, Sägeblatt unten bei breitem Material;

Figur 2 eine Seitenansicht, Sägeblatt unten bei schmalem Material;

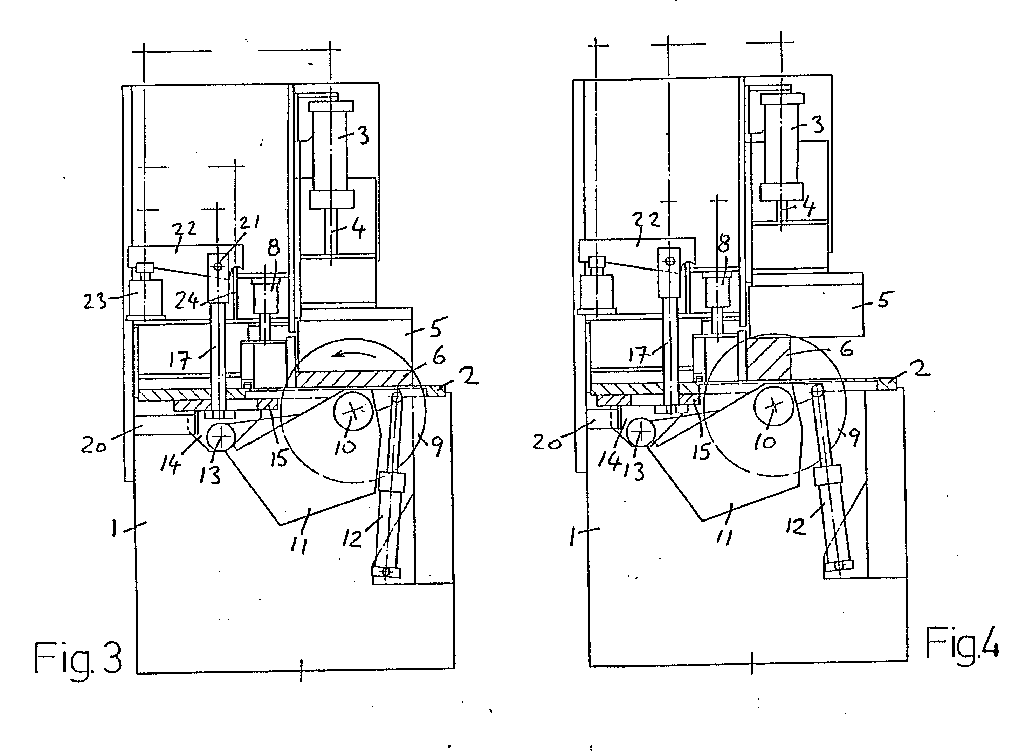

Figur 3 eine Seitenansicht, Sägeblatt oben bei breitem Material;

Figur 4 eine Seitenansicht, Sägeblatt oben bei schmalem Material;

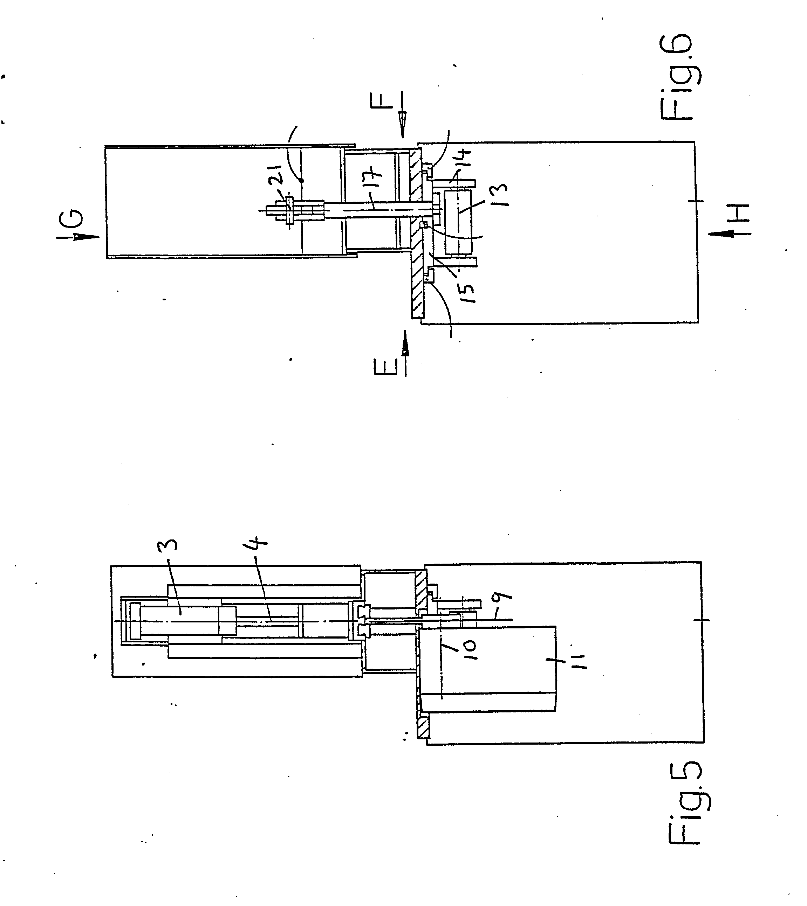

Figur 5 Vorderansicht mit sichtbarer Material-Spanneinrichtung und Getriebe;

Figur 6 Vorderansicht im Bereich des Schwenklagers;

Figur 7 eine Seitenansicht mit Zugelement-Zustange und Materialspanneinrichtung;

Figur 8 Vorderansicht im Bereich des Schwenklagers und der Zugstange;

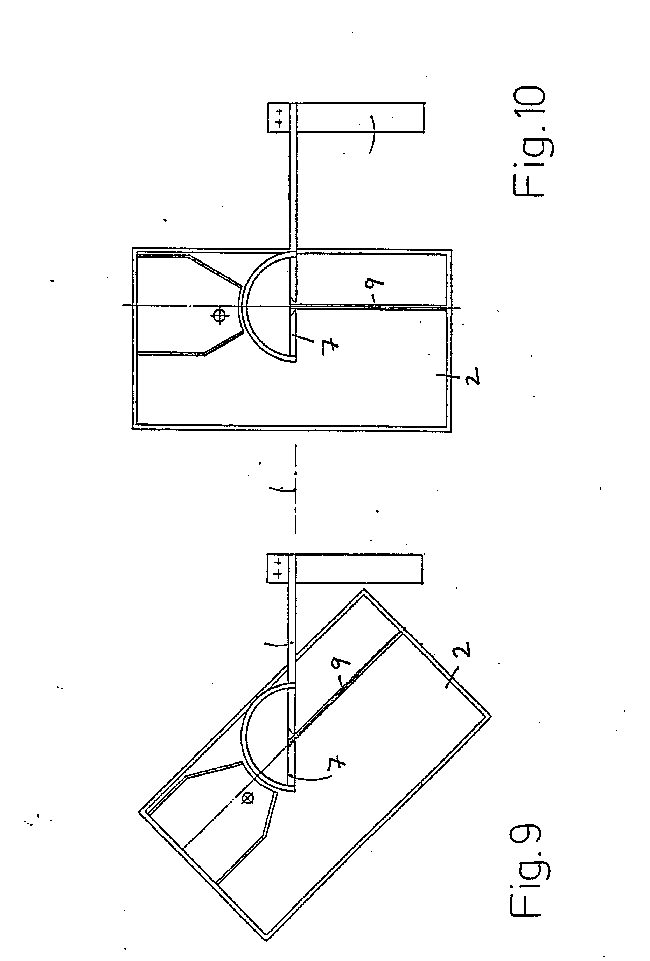

Figur 9 Draufsicht im Schnitt bei 45°;

Figur 10 Draufsicht im Schnitt bei 90°.

Die Untertischkaltkreissäge weist ein Unterteil 1 auf, das an seiner Oberseite eine waagerechte Tischplatte 2 trägt, auf der die Werkstücke, insbesondere Profile zum Sägen, verschoben und gehalten werden. Zum Festspannen der Werkstücke ist eine hydraulische Zylinderkolbeneinheit 3 vorgesehen, deren senkrechte Kolbenstange 4 mit einem Unterteil 5 die Werkstücke 6 gegen die Tischplatte 2 spannt.

Auf der Tischplatte 2 ist ferner ein Gehrungsanschlag 7 verschwenkbar gelagert, der durch eine zweite Hydraulikzylinderkolbeneinheit 8 festklemmbar ist.

Unterhalb der Tischplatte 2 befindet sich das Kreissägeblatt 9, dessen waagerechte Achse 10 an einem Schwenkarm 11 gelagert ist, der ein Getriebe für das Kreissägeblatt trägt. Das vordere Ende des Schwenkarms 11 wird durch eine dritte Hydraulikzylinderkolbeneinheit 12 betätigt und das hintere Ende ist an einer waagerechten Schwenkachse 13 gelagert, die von einem Lagerteil 14 getragen ist.

Das Lagerteil 14 weist an seiner Oberseite eine waagerechte Platte 15 auf, die an der Unterseite der Tischplatte 2 quer zur Achse 13 verschieblich anliegt. In der Platte 15 befindet sich ein Langloch 16, durch das eine Zugstange 17 geführt ist, die an ihrer Unterseite eine Platte 18 trägt, um mit dieser Platte 18 die Platte 15 gegen die Tischplatte 2 festzuklemmen. Ein Verrutschen der Platte 18 gegenüber der Platte 15 wird dadurch ausgeschlossen, daß die Platte 18 Riefen trägt. Die Platte 15 ist in nicht dargestellten Führungen gelagert und wird durch ein Verstellglied 20 bewegt, das eine Spindel oder eine weitere Hydraulikzylinderkolbeneinheit sein kann.

Das obere Ende der Zugstange 17 ist an der inneren Anlenkstelle 21 eines zweiarmigen Hebels 22 fest, dessen eines Ende an einer weiteren Hydraulikzylinderkolbeneinheit 23 fest ist und das gegenüberliegende freie Ende liegt mit seiner Unterseite an einem Lager 24 auf, das mit der Hydraulikzylinderkolbeneinheit 3, insbesondere mit dessen Zylinder, verbunden ist, so daß eine Betätigung der Einheit 3 dazu führt, daß die Kolbenstange 4 nach unten und das Lager 24 nach oben gedrückt wird.

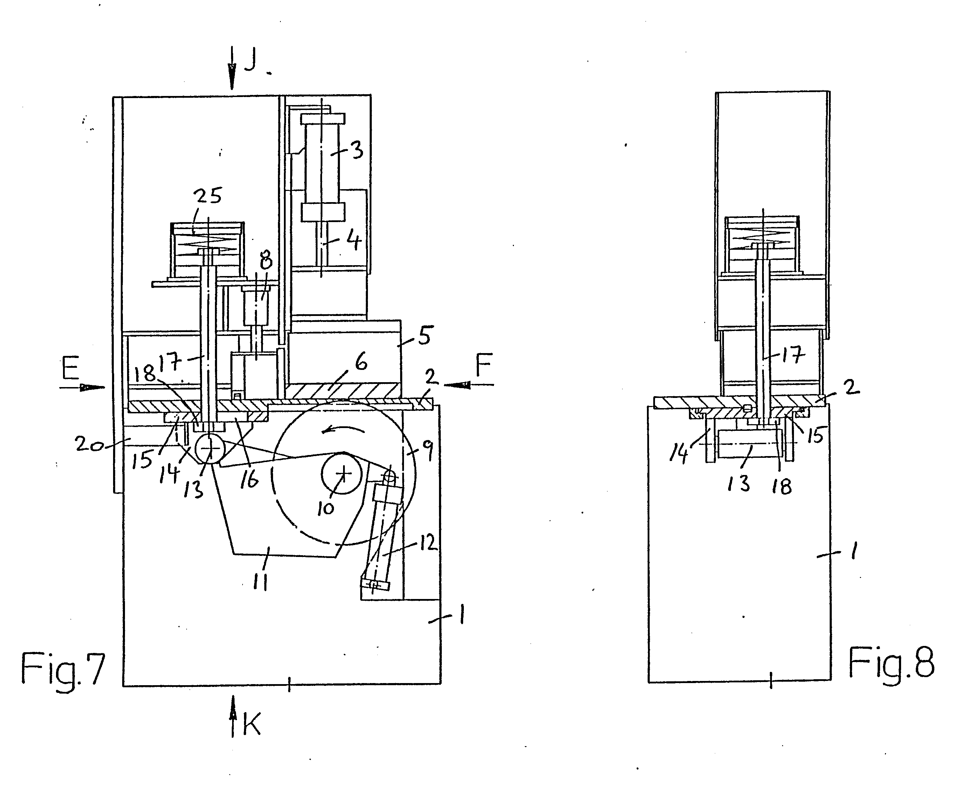

Die Zugstange 17 kann alternativ durch die verschiedensten Vorrichtungen betätigt werden. In Figur 7 ist hierzu eine Hydraulikzylinderkolbeneinheit 25 gezeigt, die direkt oben an der Zugstange 17 befestigt ist. Ferner kann statt der Zugstange eine Zahnstange oder eine Spindel mit Mutter eingesetzt werden.

## Ansprüche

1. Unter-Tisch-Kaltkreissäge, deren unter der Tischplatte angeordnetes senkrechtes Kreissägeblatt von einem Schwenkarm gehalten ist, der zum Anheben und Absenken der Kreissäge um eine waagerechte Schwenkachse beweglich ist, **dadurch gekennzeichnet,** daß die Schwenkachse (13) rechtwinklig zu ihr waagerecht verschieblich gelagert und durch eine Spannvorrichtung (17, 21, 22, 23) gegen ein Verschieben festklemmbar ist.

2. Kreissäge nach Anspruch 1, **dadurch gekennzeichnet,** daß die Schwenkachse (13) von einem Lagerteil (14) getragen ist, das unterhalb der Tischplatte (2) waagerecht verschieblich geführt ist.

3. Kreissäge nach Anspruch 2,

**dadurch gekennzeichnet,** daß das Lagerteil (14) mit einer oberen Platte (15) an der Unterseite der Tischplatte (2) waagerecht verschieblich geführt ist.

4. Kreissäge nach Anspruch 2 oder 3,

**dadurch gekennzeichnet,** daß das Lagerteil (14) durch ein Teil, insbesondere eine Zugstange (17), Spindel, Exzenter oder Zahnstange gegen die Tischplatte (2) oder gegen ein am Maschinenunterteil (1) befestigtes Teil festklemmbar ist.

5. Kreissäge nach Anspruch 4,

**dadurch gekennzeichnet,** daß die Zugstange (17) die Tischplatte (2) und ein Langloch (16) der oberen Platte (15) des Lagerteils (14) durchdringt.

6. Kreissäge nach Anspruch 4 oder 5,

**dadurch gekennzeichnet,** daß das Teil, insbesondere die Zugstange (17), durch eine Hydraulikzylinderkolbeneinheit (23, 25) betätigbar ist.

7. Kreissäge nach Anspruch 6,

**dadurch gekennzeichnet,** daß die Zugstange (17) ein zweiarmiger Hebel (22) mit seiner inneren Anlenkstelle (21) und an einem Ende des Hebels (22) die Hydraulikzylinderkolbeneinheit (23) befestigt ist.

8. Kreissäge nach Anspruch 7,

**dadurch gekennzeichnet,** daß mit dem anderen Ende des Hebels (22) ein Teil (24) verbunden ist, das mit der Vorrichtung, insbesondere der Hydraulikzylinderkolbeneinheit (3) verbunden ist, durch die die Werkstücke (6) festspannbar sind.

9. Kreissäge nach einem der vorherigen Ansprüche,

**dadurch gekennzeichnet,** daß die Schwenkachse (13), insbesondere das Lagerteil (14), durch ein Verstellglied (20) wie eine Spindel oder eine Hydraulikzylinderkolbeneinheit verstellbar ist.

10. Kreissäge nach einem der vorherigen Ansprüche,

**dadurch gekennzeichnet,** daß unten an der Zugstange (17) eine Platte (18) befestigt ist, die an der Unterseite der Platte (15) des Lagerteils (14) mit Erhebungen, insbesondere Riefen anliegt.

11. Kreissäge nach einem der vorherigen Ansprüche,

**dadurch gekennzeichnet,** daß das Lagerteil (14) durch Führungsteile gelagert ist.

12. Kreissäge nach einem der vorherigen Ansprüche,

**dadurch gekennzeichnet,** daß an der Oberseite der Tischplatte (2) ein Gehrungsanschlag (7) verschwenkbar gelagert und durch eine Hydraulikzylinderkolbeneinheit (8) festklemmbar ist.

Fig.2

Fig.1

Fig.4

Fig.3

0 284 083

Fig.5

3

4

10

9

11

Fig.6

↓G

21

17

E →     ← F

15     14

13

↑H

Fig.7

Fig.8

0 284 083

Fig.9

Fig.10

0 284 083